# EUROPEAN PATENT APPLICATION

(11) **EP 4 804 124 A2**
(43) Date of publication of application: **09.09.2026**
(21) Application number: 26185869.0
(22) Date of filing: 18.09.2023
(51) Int. Cl.: G06T 7/33

(54) **AUTOMATED RELATIVE REORIENTATION OF GEOLOGICAL CORES BASED ON THEIR UNROLLED 360° IMAGES**

(30) Priority: 21.09.2022 US 202217934079
(62) Document number(s) of the earlier application(s) in accordance with Art. 76 EPC: 23793955.8 / 4 591 272
(71) Applicant: Saudi Arabian Oil Company, Dhahran, 31311 (SA)
(72) Inventor: ALQATTAN, Hussain, 31311 Dhahran (SA); MEZGHANI, Mokhles, M., 31311 Dhahran (SA)
(74) Representative: Osha BWB

(57) **Abstract**

A method is disclosed which includes obtaining a reference image (402) of a first rock core from a wellbore, and obtaining a disoriented image (404) of a second rock core from the wellbore. The method further includes determining, using a computer processor, a reorientation angle (504) between the disoriented image (404) and the reference image (402). The method further includes determining an oriented image of the second rock core based, at least in part, on rotating the disoriented image (404) through the reorientation angle (504), updating a geological model of a hydrocarbon reservoir based, at least in part, on the oriented image; and planning a wellbore trajectory using a wellbore planning system based, at least in part, on the updated geological model.

## Description

### BACKGROUND

Geological cores are cylindrical sections of rock which may be extracted from geological formations below the surface of the Earth. Geological cores, or rock cores, may provide important information which may be used in the evaluation of hydrocarbon reservoirs. Core orientation is the process by which the original, in-situ position or orientation of a cylindrical rock core may be determined. Rock cores may be oriented to facilitate measurement of directional properties of the rock. Specifically, core orientation data may be valuable for use in geological modelling of hydrocarbon reservoirs.

The "absolute" orientation angle of a rock core cylinder is an angle between 0° and 360° that describes the original, before extraction, orientation of the core around its main, longest, axis. In addition to the orientation angle, the strike and dip of the drilling bit at the extraction location helps to orient the core in space, and subsequently, orient its parameters and geological features. These features include, but are not limited, to fractures, beddings, anisotropic permeability, etc.

Despite its benefits, measuring core orientation downhole is expensive and has a margin of error. For that, if one of two cores has a known "absolute" orientation angle, a process of "relative" reorientation can be performed to extrapolate the orientation information to the other core. This process is done by looking for clear marks (grooves or patterns) on the end of the unoriented core to rotate it until a good match with the corresponding end of the other core is achieved. By considering this alternative method, core reorientation is cost effective and can be applied to older cores. However, because such a method is done manually, it has a considerable margin of error, and human subjectivity. Thus, when rock core orientations may be unknown, an automated, objective, and repeatable method to determine the unknown core orientations may be desirable.

### SUMMARY

This summary is provided to introduce a selection of concepts that are further described below in the detailed description. This summary is not intended to identify key or essential features of the claimed subject matter, nor is it intended to be used as an aid in limiting the scope of the claimed subject matter.

In general, in one aspect, embodiments relate to a method which includes obtaining a reference image of a first rock core from a wellbore, and obtaining a disoriented image of a second rock core from the wellbore. The method further includes determining, using a computer processor, a reorientation angle between the disoriented image and the reference image. The method further includes determining an oriented image of the second rock core based, at least in part, on rotating the disoriented image through the reorientation angle. The method further includes updating a geological model of a hydrocarbon reservoir based, at least in part, on the oriented image and planning a wellbore trajectory using a wellbore planning system (based, at least in part, on the updated geological model.

In general, in one aspect, embodiments relate to a non-transitory computer readable medium storing instructions executable by a computer processor. The instructions include functionality for receiving a reference image of a first rock core from a wellbore, and receiving a disoriented image of a second rock core from the wellbore. The instructions further include functionality for determining, using a computer processor, a reorientation angle between the disoriented image and the reference image, and determining an oriented image the second rock core based, at least in part, on rotating the disoriented image through the reorientation angle. The instructions further include updating a geological model of a hydrocarbon reservoir based, at least in part, on the oriented image; and planning a wellbore trajectory using a wellbore planning system based, at least in part, on the updated geological model.

In general, in one aspect, embodiments relate to a system including a computer processor, configured to obtain a reference image of a first rock core from a wellbore, and obtain a disoriented image of a second rock core from the wellbore. The computer processor is further configured to determine a reorientation angle between the disoriented image and the reference image, and determine an oriented image of the second rock core based, at least in part, on rotating the disoriented image through the reorientation angle. The system further includes a forward geological modeler, configured to form a geological model of a hydrocarbon reservoir based, at least in part, on the oriented image. The forward geological modeler is configured to update the geological model (175) of a hydrocarbon reservoir based, at least in part, on the oriented image. The system further includes a wellbore planning system configured to plan a wellbore trajectory based, at least in part, on the updated geological model.

Other aspects and advantages of the claimed subject matter will be apparent from the following description and the appended claims.

### BRIEF DESCRIPTION OF DRAWINGS

Specific embodiments of the disclosed technology will now be described in detail with reference to the accompanying figures. Like elements in the various figures are denoted by like reference numerals for consistency.
FIG. 1 depicts a well environment in accordance with one or more embodiments.
FIG. 2 depicts a portion of a coring system in accordance with one or more embodiments.
FIG. 3 shows a rock core and corresponding rock core image in accordance with one or more embodiments.
FIG. 4 shows rock core images in accordance with one or more embodiments.
FIG. 5 shows a flowchart in accordance with one or more embodiments.
FIG. 6 shows an example in accordance with one or more embodiments.
FIG. 7 shows an example in accordance with one or more embodiments.
FIG. 8 shows a flowchart in accordance with one or more embodiments.
FIG. 9 shows a flowchart in accordance with one or more embodiments.
FIG. 10 depicts a computer system in accordance with one or more embodiments.

### DETAILED DESCRIPTION

In the following detailed description of embodiments of the disclosure, numerous specific details are set forth in order to provide a more thorough understanding of the disclosure. However, it will be apparent to one of ordinary skill in the art that the disclosure may be practiced without these specific details. In other instances, well-known features have not been described in detail to avoid unnecessarily complicating the description.

Throughout the application, ordinal numbers (e.g., first, second, third, etc.) may be used as an adjective for an element (i.e., any noun in the application). The use of ordinal numbers is not to imply or create any particular ordering of the elements nor to limit any element to being only a single element unless expressly disclosed, such as using the terms "before", "after", "single", and other such terminology. Rather, the use of ordinal numbers is to distinguish between the elements. By way of an example, a first element is distinct from a second element, and the first element may encompass more than one element and succeed (or precede) the second element in an ordering of elements.

It is to be understood that the singular forms "a," "an," and "the" include plural referents unless the context clearly dictates otherwise. Thus, for example, reference to "rock core" includes reference to one or more of such rock cores.

Terms such as "approximately," "substantially," etc., mean that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

It is to be understood that one or more of the steps shown in the flowchart may be omitted, repeated, and/or performed in a different order than the order shown. Accordingly, the scope disclosed herein should not be considered limited to the specific arrangement of steps shown in the flowchart.

Although multiple dependent claims may not be introduced, it would be apparent to one of ordinary skill that the subject matter of the dependent claims of one or more embodiments may be combined with other dependent claims.

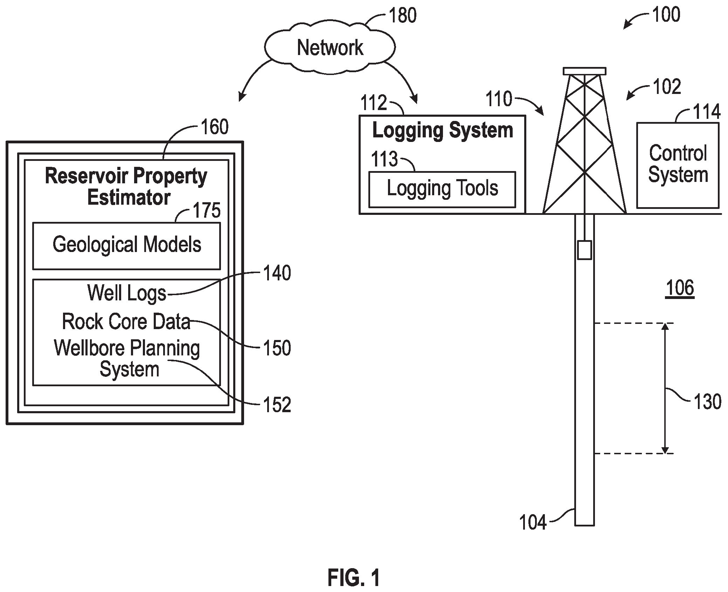

In the following description of FIGs. 1-10, any component described with regard to a figure, in various embodiments disclosed herein, may be equivalent to one or more like-named components described with regard to any other figure. For brevity, descriptions of these components will not be repeated with regard to each figure. Thus, each and every embodiment of the components of each figure is incorporated by reference and assumed to be optionally present within every other figure having one or more like-named components. Additionally, in accordance with various embodiments disclosed herein, any description of the components of a figure is to be interpreted as an optional embodiment which may be implemented in addition to, in conjunction with, or in place of the embodiments described with regard to a corresponding like-named component in any other figure.

Embodiments disclosed herein relate to a workflow to automatically reorient one geological core to another in case their absolute/relative orientation angles are not known. In one or more embodiments, the correlation is performed by taking 360° images of the two cores, then measuring the match between the unrolled 360° images of the two cores while digitally reorienting one of the two cores until a satisfying match is calculated. The unrolled 360° images are high resolution images captured around the main axis of the core cylinder and stitched together.

FIG. 1 depicts a well environment (100) in accordance with one or more embodiments. The well environment (100) may include a well (102) having a wellbore (104) extending into a formation (106). The wellbore (104) may include a bored hole that extends from a surface into a target zone of the formation (106), such as a hydrocarbon reservoir. The wellbore (104) may be vertical, highly deviated, or horizontal. Formation properties may include various geological characteristics of interest, such as porosity, permeability, resistivity, density, water saturation, total organic content, volume of kerogen, Young's modulus, Poisson's ratio and the like. Porosity may indicate how much space exists in a particular rock within an area of interest in the formation (106), where oil, gas, and/or water may be trapped. Permeability may indicate the ability of liquids and gases to flow through the rock within the area of interest. Resistivity may indicate how strongly rock and/or fluid within the formation (106) opposes the flow of electrical current. For example, resistivity may be indicative of the porosity of the formation (106) and the presence of hydrocarbons. More specifically, resistivity may be relatively low for a formation (106) that has high porosity and a large amount of water, and resistivity may be relatively high for a formation (106) that has low porosity or includes a large volume of hydrocarbons. Water saturation may indicate the fraction of water in a given pore space.

In accordance with one or more embodiments, the well environment (100) may include a drilling system (110), a logging system (112), a control system (114), and a reservoir property estimator (160). The drilling system (110) may include a drill string, drill bit, a mud circulation system and/or the like for use in advancing the wellbore (104) into the formation (106). The drilling system (110) may drill a wellbore (104) along a wellbore trajectory, which may be determined using a wellbore planning system (152). The wellbore planning system (152) may be used to plan the wellbore trajectory, including the orientation and changes in diameter of the wellbore (104) along the trajectory and the angle of incidence at which the wellbore (104) enters the target zone of the formation (106). The wellbore planning system (152) may include a computer processor with hardware-appropriate software to plan an optimized wellbore trajectory. The wellbore planning system (152) may take as inputs such factors such as the available surface well locations or kick-off points, drilling target point coordinates, the maximum permissible curvature ("dog-leg, or "build-rate"), and geological and geomechanical constraints. The wellbore planning system (152) may further incorporate limitations such as maximum torque and drag, and the mechanical strength of the drill string, casing, bottomhole assemblies, logging tools (113), and completion strings.

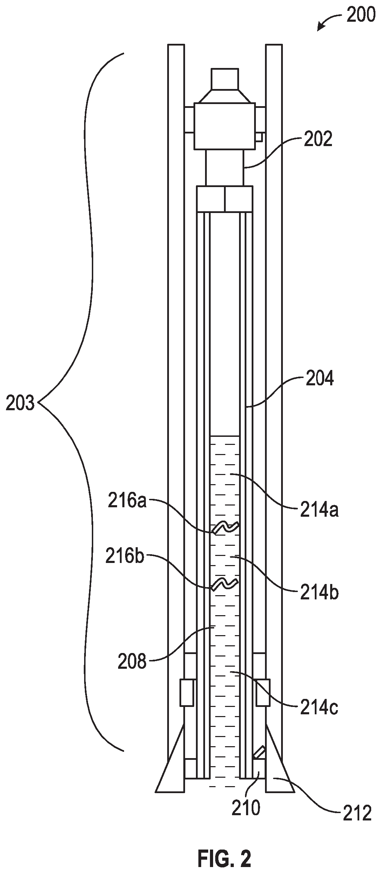

In accordance with one or more embodiments, the drilling system (100) may include a core sampling (or "coring") system that may collect core samples continuously or at intervals while drilling the wellbore (104). The coring system may be configured to collect samples of the formation (106) and is described in more detail in the context of FIG. 2.

The control system (114) may include hardware and/or software for managing drilling operations and/or maintenance operations. For example, the control system (114) may include one or more programmable logic controllers (PLCs) that include hardware and/or software with functionality to control one or more processes performed by the drilling system (110). Specifically, a programmable logic controller may control valve states, fluid levels, pipe pressures, warning alarms, and/or pressure releases throughout a drilling rig. In particular, a programmable logic controller may be a ruggedized computer system with functionality to withstand vibrations, extreme temperatures, wet conditions, and/or dusty conditions, for example, around a drilling rig. Without loss of generality, the term "control system" may refer to a drilling operation control system that is used to operate and control the equipment, a drilling data acquisition and monitoring system that is used to acquire drilling process and equipment data and to monitor the operation of the drilling process, or a drilling interpretation software system that is used to analyze and understand drilling events and progress.

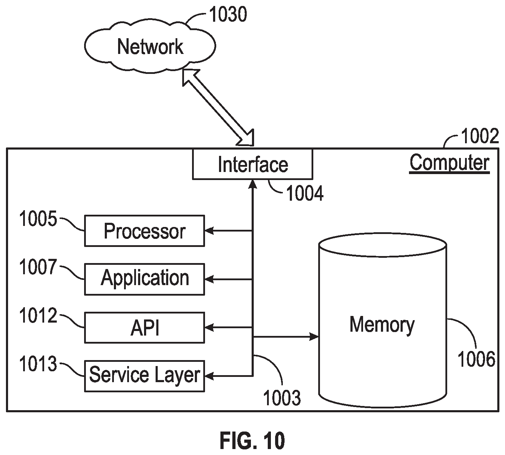

In accordance with one or more embodiments, a reservoir property estimator (160) may include hardware and/or software with functionality for storing and analyzing well logs (140), rock core data (150), seismic data, and/or other types of data to generate and/or update one or more geological models (175). Geological models (175) may include geochemical or geomechanical models that describe structural relationships within a particular geological region. While the reservoir property estimator (160) may be at a well site, in some embodiments, the reservoir property estimator (160) may be remote from a well site, *e.g.,* in an office location. Data may be transferred from the well site (100) to the reservoir property estimator (160) via a network (180) that may be implemented, without limitation, as a fiber-optic network, a satellite network, a cloud network, and/or by the physical transference of digital data storage devices, such as hard drives. In some embodiments, the reservoir property estimator (160) is implemented as part of a software platform for the control system (114). The software platform may obtain data acquired by the drilling system (110) and logging system (112) as inputs, which may include multiple data types from multiple sources. The software platform may aggregate the data from these systems (110, 112) in real time for rapid analysis. In some embodiments, the control system (114), the logging system (112), and/or the reservoir property estimator (160) may include a computer system that is similar to the computer system (1002) further discussed in relation to FIG. 10 and the accompanying description.

The logging system (112) may include one or more logging tools (113), such as a nuclear magnetic resonance (NMR) logging tool and/or a resistivity logging tool, for use in generating well logs (140) of the formation (106). For example, a logging tool may be lowered into the wellbore (104) to acquire measurements as the tool traverses a depth interval (130) (e.g., a targeted reservoir section) of the wellbore (104). The plot of the logging measurements versus depth may be referred to as a "log" or "well log". Well logs (140) may provide depth measurements of the wellbore (104) that describe such characteristics as porosity, permeability, resistivity, density, water saturation, total organic content, volume of kerogen, Young's modulus, Poisson's ratio, and the like. The resulting logging measurements may be stored and/or processed, for example, by the control system (114), to generate corresponding well logs (140) for the well (102). A well log (140) may include, for example, a plot of a logging response time versus true vertical depth (TVD) across the depth interval (130) of the wellbore (104).

FIG. 2 depicts a portion of a coring system, specifically a coring assembly (200) in accordance with one or more embodiments. The coring assembly (200) may be used to extract whole rock cores from a formation (106) below the surface of the Earth. In contrast to well logs, rock cores provide representative samples of a formation (106), that permitting physical examination and direct measurement of porosity, permeability, fluid saturation, grain density, lithology, texture, and other geologic characteristics of interest. Analysis of rock cores may provide evidence of presence, distribution, and deliverability of hydrocarbons within a given formation (106). Conventional coring, which may be performed using a coring assembly (200) similar to that which is depicted in FIG. 2, may be performed within a zone of interest within a formation (106) as the wellbore (104) being drilled. Conventional coring may yield continuous sections of rock in the form of whole cores.

The coring assembly (200) may include a coring bit (212) attached to a core barrel (203). Within the core barrel (203) an inner barrel (204) is disposed between a swivel (202) attached to an upper portion of the core barrel (203) and a core catcher (210) disposed close to the coring bit (212). The coring bit (212) consists of an annular cutting or grinding surface configured to flake, gouge, grind, or wear away the rock at the base or "toe" of the wellbore (104) and a central axial orifice configured to allow a cylindrical column, or core, to pass through. The annular cutting surface of the coring bit (212) typically includes embedded polycrystalline compact diamond (PDC) cutting elements.

An inner barrel of the core barrel (203) may be disposed above or behind the coring bit (212) and separated from the coring bit (212) by a core catcher (210). As the coring bit (212) grinds away the rock, the cylindrical rock core (208) passes through the central orifice of the coring bit (212) and through the core catcher (210) into the inner barrel (204) as the coring bit (212) advances deeper into the formation (106). The inner barrel (204) may be attached by a swivel (202) to the remainder of the core barrel (203) to permit the inner barrel (204) to remain stationary as the core barrel (203) rotates together with the coring bit (212). When the inner barrel (204) is filled with the rock core (208), the core barrel (203) containing the rock core (208) may be raised and retrieved at the ground surface. The core catcher (210) serves to grip the bottom of the rock core (208) and, as lifting tension is applied to the drillstring and the core barrel (203), the rock under the rock core (208) breaks away from the undrilled formation (106) below it. The core catcher (210) may retain the rock core (208) so that it does not fall out the bottom of the core barrel (203) through the annular orifice in the coring bit (212) as the core barrel (203) is raised to the surface.

Under ideal circumstances, the rock core (208) may be recovered as a single, continuous, intact cylinder of rock. However, frequently the collected rock core (208) takes the form of several shorter cylindrical segments (214a, 214b, 214c) separated by breaks (216a, 216b). The breaks (216a, 216b) may be a consequence of stresses experience by the rock core (208) during coring or may be caused by pre-existing natural fractures in the formation (106). In cases where the rock core (208) is collected as a continuous intact cylinder the relative orientation of different portions are fixed and easily determined. However, in cases where the rock core (208) is retrieved as a plurality of cylindrical segments (214a, 214b, 214c) each cylindrical segment may become rotated through an unknown angle relative to the other cylindrical segments making up the complete rock core (208).

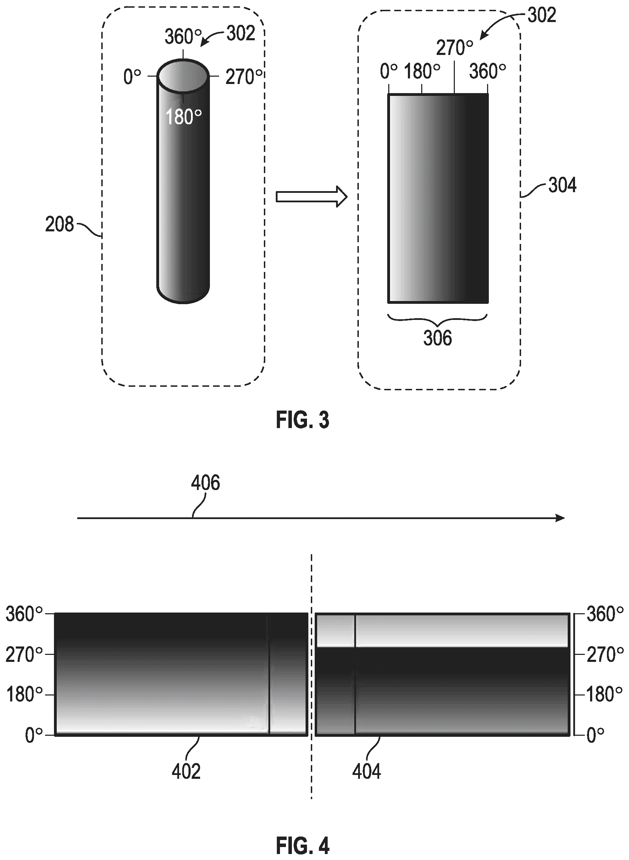

FIG. 3 shows a rock core (208) and corresponding rock core image (304) in accordance with one or more embodiments. The rock core (208) represents a whole core which may be extracted from a formation (106) using the coring assembly (200) described in FIG. 2. Positions on the cylindrical surface of the rock core (208) shown in FIG. 3 may be defined by an axial position (not shown) and a rotational angle (302) in the range of zero to 360 degrees, around its cylindrical axis. The rock core image (304) represents an image circumferential surface (306). In some embodiments, the image may be an optical image, while in other embodiments the image may be obtained from a non-optical part of the electromagnetic spectrum, such as an infrared image or an ultraviolet image.

FIG. 4 shows two rock core images from adjacent cylindrical segments, such as cylindrical segments (214a) and (214b) or cylindrical segments (214b) and (214c), in accordance with one or more embodiments. One image may be designated a reference image (402). A second image may be designated a disoriented image (404). The first rock core and the second rock core may be extracted from contiguous locations in the wellbore (104) as shown by the continuity in drilling direction (406), which may indicate increasing depth from a ground surface. The reference image (402) of the first rock core may be used to determine a reorientation angle which may be applied to the disoriented image (404), and to determine an oriented image. The oriented image may be used to update a forward geological model (175) of a hydrocarbon reservoir.

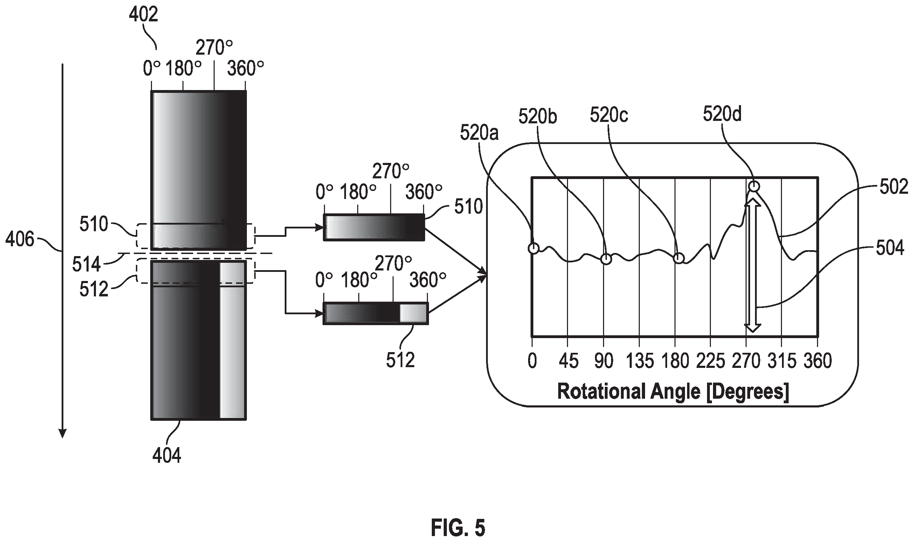

FIG. 5 shows a flowchart in accordance with one or more embodiments. Specifically, FIG. 5 shows the process by which a rock core reorientation angle may be determined, using the reference image (402) of the first rock core and the disoriented image (404) of the second rock core. A circumferential image of the first rock core, designated the reference image, and a circumference image of the second rock core, designated the disoriented image, may be taken, where the first rock core and the second rock core may be taken from contiguous locations in the wellbore (104). The reference image (402) of the first rock core and the disoriented image (404) of the second rock core may be parameterized by rotation angles ranging from zero to 360 degrees. A search window (510) may be selected from the reference image (402) covering the end of the reference cylindrical segment (214a) of the core that was contiguous with the disoriented segment (214b) when collected. Similarly, a search window (512) may be selected from the disoriented image (404) covering the end of the disoriented cylindrical segment (214b) of the core that was contiguous with the reference segment (214a) when collected. In other words, search window (510) and search window (512) each image a cylindrical segment of core, such as segments (214a) and (214b), that were separated only by a break, such as break (216a) when collected by the coring system (200). In other embodiments, the whole of the reference image (402) and the whole of the disorientated image (404) may fall within the respective search windows (510) and (512).

In accordance with one or more embodiments, a matching function (502) may be determined between the reference search window (510) and the disoriented search window (512). The matching function (502) may measure the match between each of the corresponding degree-based segments of the reference search window (510) and the disoriented search window (512), and thus between the reference image (402) and the disoriented image (404). In another embodiment, the matching function (502) may provide a measure of dissimilarity between the reference search window (510) and the disoriented search window (512).

The matching function (502) may be determined in a number of ways, without departing from the scope of the invention. For example, in some embodiments, the matching function (502) may be based on the sum of the difference between each pixel of the reference search window (510) and the corresponding pixel of the disoriented search window (512). In another embodiment, the matching function (502) may be determined by first determining both the reference search window (510) and the disoriented search window (512) a function, such as a summing or a mean, of the value of all the pixels having a common angle, i.e., in a direction parallel to the orientation of the core or, equivalently, normal to the circumference of the core. Next the difference between function for the reference search window (510) disoriented search window (512) for each angle may be determined and the differences summed to obtain a matching function (502). In still other embodiments, a correlation may be calculated between the reference search window (510) and the disoriented search window (512).

In accordance with one or more embodiments, a candidate oriented search window, such as candidate oriented search windows (600a - d), may be calculated by rotating the disoriented search window (512), through a plurality of candidate reorientation angles, and value of the matching function may be calculated for the candidate oriented search window (512). For example, the disoriented search window (512) may be rotated through 360 degrees in increments of 1 degree, or increments of 5 degrees, to generate a plurality of candidate oriented search windows and the matching function calculated after each.

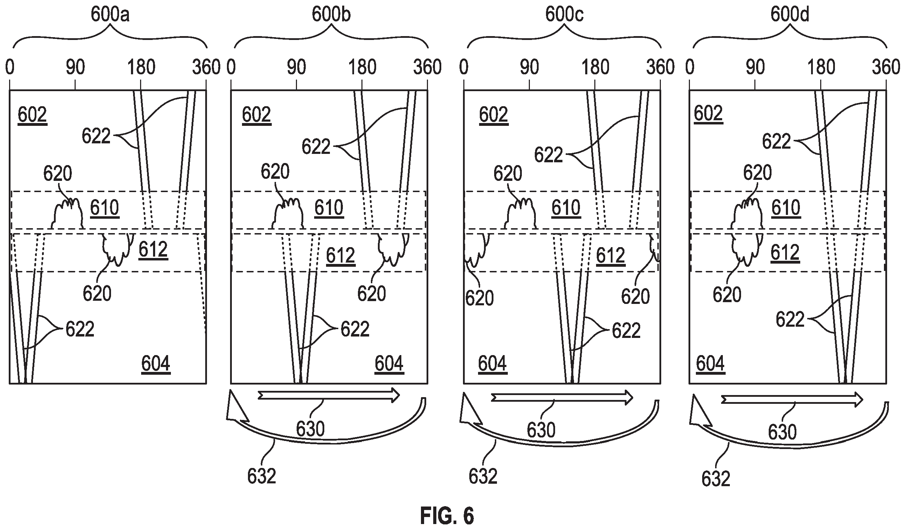

FIG. 6 shows an example of this process. FIG. 6 shows the reference image (602) and the reference search window (610) in each of four charts (600a-d). Chart (600a) also shows a disoriented image (604) and a disoriented search window (612) in an initial, disoriented orientation. Both the reference search window (610) and the disoriented search window (612) show portions of a vug (a large pore or void) (620) and a planar feature (622), such as a fracture or vein, crossing both reference search window (610) and the disoriented search window (612) at a high angle.

Chart (600b) illustrates the candidate oriented search window resulting from rotating the disoriented search window (612) (and in the example shown, the remainder of the disoriented image (604)) through a candidate orientation angle of approximately 90 degrees. This is equivalent to shifting the disoriented search window (612) in the direction of arrow (630) and wrapping the right of the disoriented search window (612) to the left as shown by arrow (632). Similarly, chart (600c) illustrates the effect of rotating the disoriented search window (612) (and in the example shown, the remainder of the disoriented image (604)) through an additional approximately 90 degrees, making approximately 180 degrees in total. In (600c) a portion of the vug (620) can be seen at both the left and the right end of the candidate oriented search window (612).

Finally, chart (600d) shows the effect of rotating the disoriented search window (612) a further 90 degrees, making a total rotation of approximately 270 degrees. In chart (600d) the two portions of the vug (620) occur at the same angle in the reference search window (610) and the candidate oriented search window (612). Similarly, the two portions of the planar feature (622) align in chart (600d) after the rotation through approximately 270 degrees. A person of ordinary skill in the art will readily appreciate that the matching function (502) corresponding to charts (600a), (600b), and (600c) may have a lower value than the matching function corresponding to chart (600d). For example, returning to FIG. 5, the matching function value (520a) may correspond to chart (600a), value (520b) may correspond to chart (600b), value (520c) may correspond to chart (600c), and value (520d) may correspond to chart (600d). In some embodiments, a matching function (502) may be selected such that finding the rotational angle at which the matching function (502) attains maximum value corresponds to identifying the reorientation angle (504). In other embodiments, a matching function (502) may be selected such that finding the rotational angle at which the matching function (502) attains minimum value corresponds to identifying the reorientation angle (504).

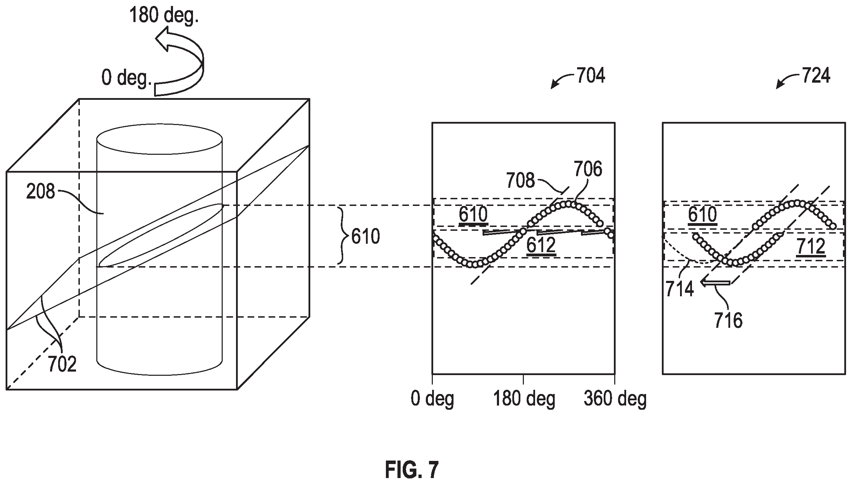

While the planar features (622) shown in FIG. 6 cross the boundary between the reference search window (610) and the rotated disoriented search window (612) approximately perpendicularly, this may frequently not be the case. FIG. 7 shows an illustrative example of a rock core (208) intersected by a planar geological feature (702), such as a geological formation boundary. Wellbores (104) are frequently vertical or close to vertical, and geological formation boundaries are frequently horizontal or slightly dipping. Thus, wellbores (104) frequently intersect bedding planes at angles close to perpendicular. In these circumstances, it is well-known in the art that the trajectory in depth and azimuth of the geological feature appears in the rock core image (704) as a sinusoidal curve (706) that may intersect the reference search window (610) and the disoriented search window (612) at a significant slope (708).

In some embodiments, a matching function may be defined, that incorporates the trajectory in depth and azimuth of the geological feature. For example, a sinusoidal curve may be fit to the trajectory in the reference search window (610) and an amplitude (610) of sinusoid determined. The determined sinusoid may then be used, for example by extrapolation, to predict the anticipated location of the geological feature (708) in the disoriented search window (612). In other examples, a sloping line (708) may be fit to the geological feature (702) and the sloping line may be used to predict the anticipated location of the geological feature (708) in the disoriented search window (612).

As an illustrative example, the rock core image (724) shows a reference search window (610) containing a portion of the sinusoid (706) produced by the intersection of the bedding plane (702) with the rock core (208). A sinusoidal curve (714) may be fit to the sinusoid manifested in the reference search window (610) and used to predict the expected location of the portion of the geological feature (702) intersecting the disoriented search window (712) when the disoriented search window is correctly rotated through the reorientation angle (504). It will be clear to one of ordinary skill in the art that the reference search window may be rotated through an angle indicated by the arrow (716) to correctly orient the disoriented image.

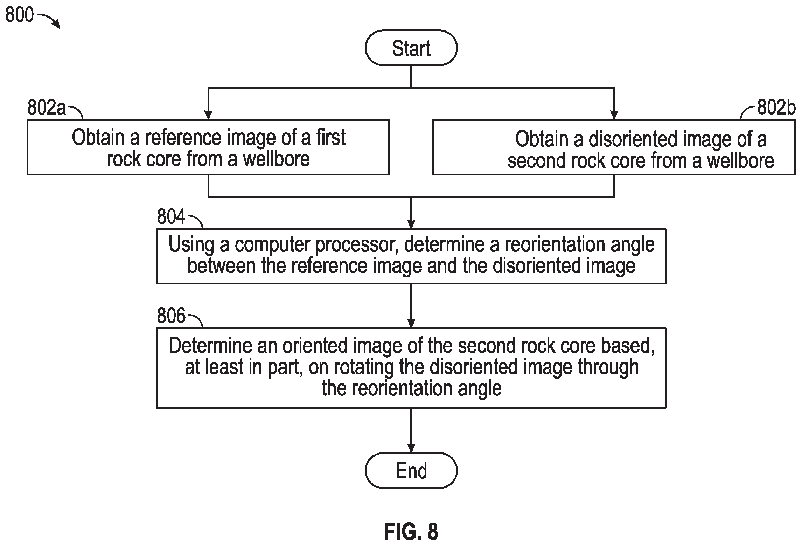

FIG. 8 shows a flowchart in accordance with one or more embodiments. Specifically, FIG. 8 describes determination of an oriented image of a second rock core.

In Step 802a, a reference image (402) of a first rock core is obtained from a wellbore (104). The reference image (402) is an image of a circumferential surface of the first rock core, such as that which is depicted in FIG. 4.

In Step 802b, a disoriented image (404) of a second rock core is obtained from a wellbore (104). The disoriented image (404) is an image of a circumferential surface of the second rock core, such as that which is depicted in FIG. 4. The first rock core and second rock core may be extracted from contiguous locations in the wellbore (104). The wellbore (104) from which the rock cores are obtained may extend into a target zone of a formation (106) such as a hydrocarbon reservoir, similar to the wellbore (104) depicted in FIG. 1.

In Step 804, using a computer processor, a reorientation angle (504) between the disoriented image (404) and the reference image (402) is determined. The reorientation angle (504) is determined by selecting a reference search window (510) from the reference image (402) and a disoriented search window (512) from the disoriented image (404), determining a matching function (502) between the reference search window (510) and the disoriented search window (512), and determining the reorientation angle (504) that produces an extremum of the matching function (502).

In accordance with one or more embodiments, with regard to Step 804, the reference search window (510) and disoriented search window (512) may be image segments or whole images representing originally contiguous portions of rock core, such as the search windows shown in FIG. 5. The matching function (502) may provide a measure of similarity or dissimilarity between the reference search window (510) and the disoriented search window (512), an example of which is also in FIG. 5. The reorientation angle may correspond to a maximum or minimum value of the matching function (502), such as the example reorientation angle (504) which is also selected and illustrated in FIG. 5.

In Step 806, an oriented image of the second rock core may be determined based, at least in part, on rotating the disoriented image (404) of the second rock core through the reorientation angle (504), as obtained in Step 804. An example rotation of the disoriented image (404) is depicted in FIG. 6. A geological model (175) of a hydrocarbon reservoir may be updated based, at least in part, on the oriented image. A wellbore trajectory may be planned using a wellbore planning system (152), based, at least in part, on the updated geological model (175) resulting from the oriented image.

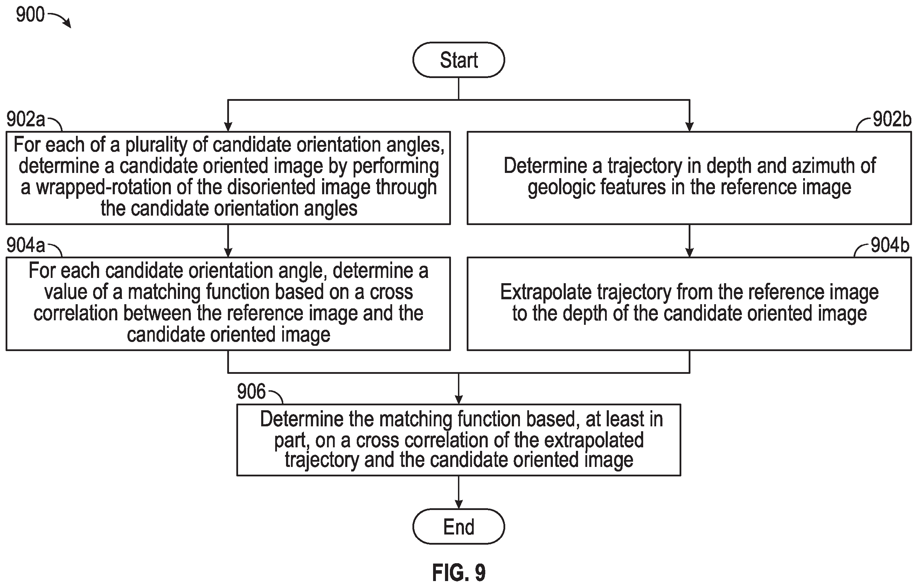

FIG. 9 shows a flowchart in accordance with one or more embodiments. Specifically, FIG. 9 describes determination of the matching function (502) as discussed in Step 804 of FIG. 8.

In Step 902a, for each of a plurality of candidate orientation angles, a candidate oriented image may be determined by performing a wrapped-rotation of the disoriented image (404) through the candidate orientation angles. The wrapped rotation of the disoriented image (404) relative to each candidate oriented image may occur in degree increments, as depicted in FIG. 6.

In Step 904a, for each candidate orientation angle, a value of a matching function (502) may be determined based on a cross correlation between the reference image (402) and the candidate oriented image of Step 902a. The matching function (502) may measure the similarity or dissimilarity between each of the corresponding degree-based segments of the reference image (402) and the candidate oriented image, as also depicted in FIG. 6.

Separately, in Step 902b, a trajectory in depth and azimuth may be determined for geological features (702) in the reference image (402). The reference image (402) may be intersected by geological features (702) such as a geological formation boundary or bedding plane, as depicted in FIG. 7.

In Step 904b, the trajectory obtained in Step 902b is extrapolated from the reference image (402) to the depth of the candidate oriented image. The extrapolation may predict the anticipated location of the geological feature (708) within the candidate oriented image, such as in the example shown in FIG. 7.

In Step 906, the matching function (502) may be determined based, at least in part, on a cross correlation of the extrapolated trajectory of Step 904b and the candidate oriented image. This matching function contributes to the overall determination of the reorientation angle and oriented image, as discussed above referencing FIG. 8.

In accordance with one or more embodiments, the oriented image of the second rock core may be used to update a geological model (175) of a hydrocarbon reservoir. The oriented image and updated geological model (175) may be used to aid in determining the likely location of hydrocarbons in a geological region of interest. The likely location of hydrocarbons may include the latitude, longitude, and depth extents of the hydrocarbons or, in other words, the spatial extent of the hydrocarbon reservoir in all three dimensions. These locations may in turn be used to identify drilling targets to drill a wellbore (104) to produce the hydrocarbons to the surface. The target may include a latitude, longitude, and depth at which the wellbore (104) may be planned to enter the hydrocarbon reservoir and/or terminate within the hydrocarbon reservoir.

In accordance with one or more embodiments, the oriented image and updated geological model (175) may further be used to aid in determining one or more zones which may constitute a drilling target. Further, a wellbore (104) path may be planned to target these zones. For example, favorable source rocks identified using the workflows described in FIGs. 8 and 9 may be further targeted with additional wells drilled from the surface or extending off from a location within an already drilled wellbore (104), such as the wellbore (104) in which the rock cores were obtained to determine the oriented image. Such wells, referred to as "side-track" wells or "side-tracks" may target the portions of the formation (106) determined to have favorable characteristics such as high porosity. Furthermore, a wellbore planning system (152) may be used to plan the wellbore trajectory. The wellbore planning system (152) may include a computer processor with hardware appropriate software to plan an optimized wellbore trajectory.

In other embodiments, completion decisions such as where and how to hydraulically fracture the formation (106) or where to acidize the formation (106) to enhance production may be made based, at least in part, on the oriented image and updated geological model (175) obtained using the workflows described in FIGs. 8 and 9. In still further embodiments, surface production facilities such as pipelines and gas-oil separation plants may be determined based upon the oriented image and updated geological model (175) generated using the workflows described in FIGs. 8 and 9. As a result, these completion and production decisions may be guided, at least in part, by the matching function (502), reorientation angle (504), oriented image, and updated geological model (175).

FIG. 10 depicts a block diagram of a computer system (1002) used to provide computational functionalities associated with described machine learning networks, algorithms, methods, functions, processes, flows, and procedures as described in this disclosure, according to one or more embodiments. The illustrated computer (1002) is intended to encompass any computing device such as a server, desktop computer, laptop/notebook computer, wireless data port, smart phone, personal data assistant (PDA), tablet computing device, one or more processors within these devices, or any other suitable processing device, including both physical or virtual instances (or both) of the computing device. Additionally, the computer (1002) may include a computer that includes an input device, such as a keypad, keyboard, touch screen, or other device that can accept user information, and an output device that conveys information associated with the operation of the computer (1002), including digital data, visual, or audio information (or a combination of information), or a GUI.

The computer (1002) can serve in a role as a client, network component, a server, a database or other persistency, or any other component (or a combination of roles) of a computer system for performing the subject matter described in the instant disclosure. The illustrated computer (1002) is communicably coupled with a network (1030). In some implementations, one or more components of the computer (1002) may be configured to operate within environments, including cloud-computing-based, local, global, or other environment (or a combination of environments).

At a high level, the computer (1002) is an electronic computing device operable to receive, transmit, process, store, or manage data and information associated with the described subject matter. According to some implementations, the computer (1002) may also include or be communicably coupled with an application server, e-mail server, web server, caching server, streaming data server, business intelligence (BI) server, or other server (or a combination of servers).

The computer (1002) can receive requests over network (1030) from a client application (for example, executing on another computer (1002)) and responding to the received requests by processing the said requests in an appropriate software application. In addition, requests may also be sent to the computer (1002) from internal users (for example, from a command console or by other appropriate access method), external or third-parties, other automated applications, as well as any other appropriate entities, individuals, systems, or computers.

Each of the components of the computer (1002) can communicate using a system bus (1003). In some implementations, any or all of the components of the computer (1002), both hardware or software (or a combination of hardware and software), may interface with each other or the interface (1004) (or a combination of both) over the system bus (1003) using an application programming interface (API) (1012) or a service layer (1013) (or a combination of the API (1012) and service layer (1013). The API (1012) may include specifications for routines, data structures, and object classes. The API (1012) may be either computer-language independent or dependent and refer to a complete interface, a single function, or even a set of APIs. The service layer (1013) provides software services to the computer (1002) or other components (whether or not illustrated) that are communicably coupled to the computer (1002).

The functionality of the computer (1002) may be accessible for all service consumers using this service layer. Software services, such as those provided by the service layer (1013), provide reusable, defined business functionalities through a defined interface. For example, the interface may be software written in JAVA, C++, or other suitable language providing data in extensible markup language (XML) format or another suitable format. While illustrated as an integrated component of the computer (1002), alternative implementations may illustrate the API (1012) or the service layer (1013) as stand-alone components in relation to other components of the computer (1002) or other components (whether or not illustrated) that are communicably coupled to the computer (1002). Moreover, any or all parts of the API (1012) or the service layer (1013) may be implemented as child or sub-modules of another software module, enterprise application, or hardware module without departing from the scope of this disclosure.

The computer (1002) includes an interface (1004). Although illustrated as a single interface (1004) in FIG. 10, two or more interfaces (1004) may be used according to particular needs, desires, or particular implementations of the computer (1002). The interface (1004) is used by the computer (1002) for communicating with other systems in a distributed environment that are connected to the network (1030). Generally, the interface (1004) includes logic encoded in software or hardware (or a combination of software and hardware) and operable to communicate with the network (1030). More specifically, the interface (1004) may include software supporting one or more communication protocols, such as the Wellsite Information Transfer Specification (WITS) protocol, associated with communications such that the network (1030) or interface's hardware is operable to communicate physical signals within and outside of the illustrated computer (1002).

The computer (1002) includes at least one computer processor (1005). Although illustrated as a single computer processor (1005) in FIG. 10, two or more processors may be used according to particular needs, desires, or particular implementations of the computer (1002). Generally, the computer processor (1005) executes instructions and manipulates data to perform the operations of the computer (1002) and any algorithms, methods, functions, processes, flows, and procedures as described in the instant disclosure.

The computer (1002) also includes a memory (1006) that holds data for the computer (1002) or other components (or a combination of both) that can be connected to the network (1030). For example, memory (1006) can be a database storing data consistent with this disclosure. Although illustrated as a single memory (1006) in FIG. 10, two or more memories may be used according to particular needs, desires, or particular implementations of the computer (1002) and the described functionality. While memory (1006) is illustrated as an integral component of the computer (1002), in alternative implementations, memory (1006) can be external to the computer (1002).

The application (1007) is an algorithmic software engine providing functionality according to particular needs, desires, or particular implementations of the computer (1002), particularly with respect to functionality described in this disclosure. For example, application (1007) can serve as one or more components, modules, applications, etc. Further, although illustrated as a single application (1007), the application (1007) may be implemented as multiple applications (1007) on the computer (1002). In addition, although illustrated as integral to the computer (1002), in alternative implementations, the application (1007) can be external to the computer (1002).

There may be any number of computers (1002) associated with, or external to, a computer system containing a computer (1002), wherein each computer (1002) communicates over network (1030). Further, the term "client," "user," and other appropriate terminology may be used interchangeably as appropriate without departing from the scope of this disclosure. Moreover, this disclosure contemplates that many users may use one computer (1002), or that one user may use multiple computers (1002).

Reservoir characteristics may be determined using a variety of different techniques. For example, certain reservoir characteristics can be determined via coring (e.g., physical extraction of rock samples) to produce core samples and/or logging operations (e.g., wireline logging, logging-while-drilling (LWD) and measurement-while-drilling (MWD)). Coring operations may include physically extracting a rock sample from a region of interest within the wellbore (104) for detailed laboratory analysis, including the conventional coring operations as discussed in relation to FIG. 2.

Although only a few example embodiments have been described in detail above, those skilled in the art will readily appreciate that many modifications are possible in the example embodiments without materially departing from this invention. Accordingly, all such modifications are intended to be included within the scope of this disclosure as defined in the following claims.

## Claims

1. A method, comprising:
obtaining a reference image (402, 602) of a first rock core from a wellbore (104);
obtaining a disoriented image (404, 604) of a second rock core from the wellbore (104);
determining, using a computer processor (1005), a reorientation angle (504) between the disoriented image (404, 604) and the reference image (402, 602);
determining an oriented image of the second rock core based, at least in part, on rotating the disoriented image (404, 604) through the reorientation angle (504);
updating a geological model (175) of a hydrocarbon reservoir based, at least in part, on the oriented image; and
planning a wellbore trajectory using a wellbore planning system (152) based, at least in part, on the updated geological model (175).

2. The method of claim 1, wherein the reference image (402, 602) is an image of a circumferential surface of the first rock core and the disoriented image (404, 604) is an image of a circumferential surface of the second rock core.

3. The method of claim 1 or 2, wherein the first rock core and the second rock core are taken from contiguous locations in the wellbore (104).

4. The method of claim 1, further comprising drilling a wellbore (104) guided by the planned wellbore trajectory using a drilling system (110).

5. A non-transitory computer readable medium storing instructions executable by a computer processor (1005), the instructions comprising functionality for:
receiving a reference image (402, 602) of a first rock core from a wellbore (104);
receiving a disoriented image (404, 604) of a second rock core from the wellbore (104);
determining, using a computer processor (1005), a reorientation angle (504) between the disoriented image (404, 604) and the reference image (402, 602);
determining an oriented image the second rock core based, at least in part, on rotating the disoriented image (404, 604) through the reorientation angle (504);
updating a geological model (175) of a hydrocarbon reservoir based, at least in part, on the oriented image; and
planning a wellbore trajectory using a wellbore planning system (152) based, at least in part, on the updated geological model (175) .

6. The non-transitory computer readable medium of claim 5, wherein the reference image (402, 602) is an image of a circumferential surface of the first rock core and the disoriented image (404, 604) is an image of a circumferential surface of the second rock core.

7. The non-transitory computer readable medium of claim 5 or 6, wherein the first rock core and the second rock core are taken from contiguous locations in the wellbore (104).

8. A system comprising:
a computer processor (1005), configured to:
obtain a reference image (402, 602) of a first rock core from a wellbore (104),
obtain a disoriented image (404, 604) of a second rock core from the wellbore (104),
determine a reorientation angle (504) between the disoriented image (404, 604) and the reference image (402, 602), and
determine an oriented image of the second rock core based, at least in part, on rotating the disoriented image (404, 604) through the reorientation angle (504);
a forward geological modeler, configured to form a geological model of a hydrocarbon reservoir based, at least in part, on the oriented image,
wherein the forward geological modeler is configured to update the geological model (175) of a hydrocarbon reservoir based, at least in part, on the oriented image; and
a wellbore planning system (152) configured to plan a wellbore trajectory based, at least in part, on the updated geological model (175).

9. The system of claim 8, wherein the first rock core and the second rock core are taken from contiguous locations in the wellbore (104).

10. The system of claim 8, the system configured to drill a wellbore (104) guided by the planned wellbore trajectory using a drilling system (110).

11. The system of claim 8, further comprising a drilling system (110) configured to drill a wellbore (104) guided by the planned wellbore trajectory.
